# EUROPEAN PATENT APPLICATION

(11) **EP 0 710 443 A1**
(43) Date of publication of application: **08.05.1996**
(21) Application number: 94308148.9
(22) Date of filing: 04.11.1994
(51) Int. Cl.: A22C 13/00

(54) **Casings for containing paste**

(71) Applicant: Colpak (Proprietary) Limited, Cape Town, Western Cape (ZA)
(72) Inventor: Finsterbusch, Hans Eberhard, Cape Town, Western Cape (ZA)
(74) Representative: Skone James, Robert Edmund

(57) **Abstract**

A casing is disclosed for packaging substances which are in the form of flowable pastes, the casing being particularly suitable for sausages of the salami and polony types. The casing comprises an outer layer in the form of a mat of non-woven material which is laminated to a film of heat sealable synthetic plastics material. The non-woven mat can be of cotton, cellulose, a synthetic plastics material, natural fibre cloth or a collagen fibre cloth made from animal hide. The film can be of polyethylene, polypropylene, a polypropylene copolymer, ethylvinylalcohol or an ionomer based on an ethylene/methacrylic acid copolymer.

## Description

THIS INVENTION relates to casings for containing pastes.

Sausage casings are known which comprise a fibrous mat which provides a matt external surface simulating natural casings. Some known fibrous casings are water vapour and oxygen impermeable and this is achieved by coating an aqueous solution of PVDC (polyvinylidenechloride) onto the fibrous mat and allowing it to dry. Oxygen and water vapour impervious casings prevent weight loss and drying out of the product. Other casings are permeable to smoke and oxygen and are used, for example, when the product is to be smoked after being packed in the casing.

The casing in accordance with the present invention is particularly intended to contain sausages of the polony type which is where its matt external finish, which simulates a natural casing, is advantageous. It can, however, be used with any product which is in the form of a flowable paste at the time of packing eg cheese, tomato sauce, grease etc.

According to one aspect of the present invention there is provided a cylindrical casing comprising a non-woven fibrous mat and a heat sealable synthetic plastics material film which are laminated to one another, the mat forming the outer layer of the casing and the film the inner layer.

The mat can be of cotton, cellulose, a heat sealable synthetic plastics material, natural fibre cloth, a collagen fibre cloth made from animal hide or any other suitable textile fibre.

Where the mat is of heat sealable synthetic plastics material, polyethylene is the preferred material.

A closure tape of heat sealable synthetic plastics material can be provided internally of the casing, the tape being scaled to both longitudinally extending edges of said heat sealable film.

The film and the tape can be of any suitable heat sealable material. Polyolefins such as polyethylene and polypropylene are particularly suitable. Of the polyethylenes, low density polyethylene, high density polyethylene and linear low density polyethylene are suitable. Polypropylene and polyethylene also provide a barrier against water vapour penetration.

If desired a barrier layer of, for example, a polyamide, EVOH (ethylvinylalcohol) or polyethyleneterephthalate (PET) can be provided between said mat and said film to provide a barrier against transmission of gases such as oxygen.

The film, and the barrier layer if provided, can be of heat shrinkable or non-shrinkable material.

The tape can be a single ply of polyethylene or polypropylene or can comprise a ply of polyethylene or polypropylene laminated to a barrier layer. Low density polyethylene, high density polyethylene and linear low density polyethylene are suitable materials for a single ply or for a ply which is laminated to a barrier layer. Polyamide, EVOH (ethylvinylalcohol) and polyethyleneterephthalate (PET) are suitable materials for the barrier layer of the tape, these preventing oxygen penetration.

The preferred material for the fibrous mat is non-woven polyethylene. A mat of this type is commercially available from De Pont under the Tradename "TYVEK". When a fibrous mat of synthetic plastics material is used, it is possible to close the casing by using an internal tape to join the longitudinally extending edges of the film. However, the provision of a heat sealable non-woven mat makes it possible to secure the longitudinally extending edges of the laminated film and mat to one another by means of an overlap seal.

The fibrous mat, whether heat sealable or not heat sealable, can be printed before or after lamination to the film but before the laminate is formed into a sleeve.

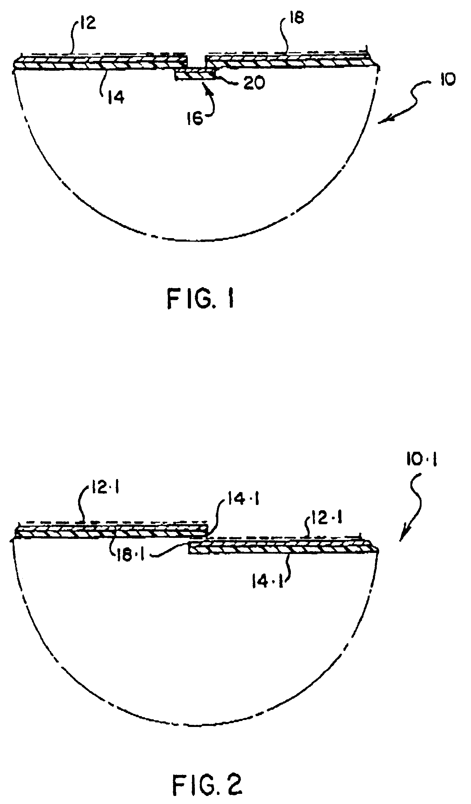

For a better understanding of the present invention, and to show how the same may be carried into effect, reference will now be made, by way of example, to the accompanying drawing in which Figures 1 and 2 are diagrammatic cross-sections of casings in accordance with the present invention.

Referring firstly to Figure 1, the casing 10 illustrated comprises a non-woven fibrous mat 12 laminated to a film 14 of heat sealable synthetic plastics material. The mat 12 can be of cellulose fibre, cotton, collagen, "TYVEK" or any other material which can be formed into a non-woven mat. Cellulosic material such as paper and agricultural waste products which have been milled to a fibrous, fluffy form can be formed into non-woven mats. The film 14 can be of any heat sealable synthetic plastics material which has the requisite properties. Polyethylene is the preferred material. Low density polyethylene, high density polyethylene and linear low density polyethylene are suitable materials. Other suitable materials are polypropylene and EVA (ethylvinylacetate) and "SURLYN". "SURLYN" is manufactured by Du Pont and is derived from ethylene/methacrylic acid co-polymers. It is an ionomer, that is, a thermoplastic polymer which is ionically crosslinked.

The mat 12 and film 14 are laminated together in flat form using conventional laminating machinery. The elongate web formed is thereafter cut into strip configuration, the width of the strip being such as to provide a casing of the desired diameter. The strip is then formed into tubular form and the adjacent longitudinally extending edges of the strip are secured to one another by a tape 16. The tape 16 can comprise a heat sealable synthetic plastics material. The tape 16 and film 14 can be of the same material so that the tape 16 can readily be heat sealed to the film 14.

Reference numeral 18 in Figure 1 designates a barrier layer which serves to prevent gases such as oxygen, passing through the casing. The barrier layer 18 can be of a polyamide, EVOH (ethylvinylalcohol) or polyethyleneterephthalate. The barrier layer can be coated onto what becomes the inner face of the mat 12 before lamination. The tape 16 can also include a barrier layer of the same type, this layer being designated 20 in Figure 1. The layer 20, being on that surface of the tape 16 which is remote from the film 14, does not interfere with the heat sealing operation.

In Figure 2 the mat of the casing 10.1 is designated 12.1 and is of a heat sealable non-woven synthetic plastics material. Polyethylene fibres of sufficient fineness can be made into a mat, and a suitable mat is that sold commercially under the trade name TYVEK. The other components of the casing of Figure 2 are the same as the casing of Figure 1 and have been designated with the same reference numerals to which the suffix ".1" has been added. Because the mat 12.1 is heat sealable, a tape is not required and the mat 12.1 can be heat sealed directly to the film 14.1 thereby providing an overlap seal.

The films 14 and 14.1 can be of heat shrinkable material. The casing, after it has been filled, is heated so that it shrinks onto the contents thereby eliminating all folds and wrinkles which give the impression that the product is "old". Such heating can be by dipping in hot water, spraying with hot water or passing through a heat shrink tunnel.

If desired, the external face of the mat 12, 12.1 can be coated with polyvinylidenechloride (PVDC) thereby to provide a gas barrier. The PVDC can be applied in the form of an aqueous emulsion which is then dried to leave a thin layer of solid PVDC. A casing with a PVDC layer does not have an appearance which is significantly different to a casing without such a layer. However, to avoid any change in appearance it is possible for the PVDC to be between the mats 12, 12.1 and the barrier layer 18 or between the films 14, 14.1 and the barrier layer 18.

## Claims

1. A cylindrical casing comprising a non-woven fibrous mat and a heat sealable synthetic plastics material film which are laminated to one another, the mat forming the outer layer of the casing and the film the inner layer.

2. A casing as claimed in claim 1, wherein said non-woven mat is of cotton, cellulose, a synthetic plastics material, natural fibre cloth or a collagen fibre cloth made from animal hide.

3. A casing as claimed in claim 1 or 2, wherein the non-woven mat is of a heat sealable synthetic plastics material.

4. A casing as claimed in claim 1, 2 or 3, wherein said heat sealable synthetic plastics material film is of polyethylene, polypropylene, a polypropylene copolymer, ethylvinylacetate or an ionomer based on an ethylene/methacrylic acid copolymer.

5. A casing as claimed in any of claims 1 to 4, wherein a tape of heat sealable synthetic plastics material is provided internally of the casing, the tape being sealed to both longitudinally extending edges of said heat sealable film.

6. A casing as claimed in claim 5, wherein said tape is of polyethylene, polypropylene, a polypropylene copolymer, ethylvinylalcohol or an ionomer based on an ethylene/methacrylic acid copolymer.

7. A casing as claimed in either of claims 5 and 6, wherein the tape comprises a ply of said heat sealable synthetic plastics material laminated to a barrier layer.

8. A casing as claimed in claim 8, wherein said barrier layer is a polyamide, EVOH (ethylvinylalcohol) or polyethyleneterephthalate (PET).

9. A casing as claimed in any one of claims 1 to 9, in which a barrier layer is provided between said mat and said film.

10. A casing as claimed in claim 9, wherein said barrier layer is a polyamide, EVOH (ethylvinylalcohol) or polyethyleneterephthalate (PET).
